(19) Europäisches Patentamt
European Patent Office
Office européen des brevets

(11) **EP 4 574 341 A1**

(12) **EUROPÄISCHE PATENTANMELDUNG**

(43) Veröffentlichungstag:
**25.06.2025  Patentblatt 2025/26**

(21) Anmeldenummer: **23219046.2**

(22) Anmeldetag: **21.12.2023**

(51) Internationale Patentklassifikation (IPC):
***B25F 5/00*** *(2006.01)*     ***H02P 29/024*** *(2016.01)*
***H02P 29/60*** *(2016.01)*

(52) Gemeinsame Patentklassifikation (CPC):
**B25F 5/00; B25F 5/008; H02P 29/024; H02P 29/60**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder:
• **Eftekhari, Maryam**
  **86836 Untermeitingen (DE)**
• **Aghazadeh, Hadi**
  **80805 München (DE)**
• **Schweren, Sebastian**
  **86179 Augsburg-Hauntstetten (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUR DETEKTION VON ABNORMALITÄTEN BEIM BETRIEB EINES ELEKTROHANDWERKZEUGS**

(57)    Die Erfindung betrifft ein computerimplementiertes Verfahren zur Detektion von Abnormalitäten beim Betrieb eines Elektrohandwerkzeugs zur frühzeitigen Erkennung von Verschleiß- oder Fehlerzuständen auf Basis der Überwachung des Kühlluftstromes für zumindest einen über eine integrierte Steuerelektronik angesteuerten Elektromotor des Elektrohandwerkzeugs, umfassend die folgenden Schritte: Ermitteln einer ersten Temperatur bezogen an der Steuerelektronik; Messen einer zweiten Temperatur mit einem im Kühlluftstrom angeordneten Temperatursensor; Vergleichen des zeitlichen Verlaufs der geschätzten ersten Temperatur mit dem zeitlichen Verlauf der gemessenen zweiten Temperatur; Auswerten der Vergleichsdaten dahingehend, ob die zeitpunktbezogene Temperaturdifferenz zwischen der ersten Temperatur und der zweiten Temperatur über einen festgelegten Schwellwert ansteigt, um auf eine den Kühlluftstrom reduzierende oder blockierende verschleiß- oder fehlerverursachte Abnormalität rückzuschließen.

Fig. 1

**Beschreibung**

Die vorliegende Erfindung betrifft ein computerimplementiertes Verfahren zur Detektion von Abnormalitäten beim Betrieb eines Elektrohandwerkzeugs zur frühzeitigen Erkennung von Verschleiß- oder Fehlerzuständen, ein Elektrohandwerkzeug mit einem Elektromotor als Antriebseinheit sowie auch ein das Verfahren verkörperndes Computerprogramm, welches auf einer mikroprozessorgesteuerten Steuereinheit des Elektrohandwerkzeugs ausführbar ist.

Das Einsatzgebiet der Erfindung erstreckt sich auf Elektrohandwerkzeuge, wie beispielsweise Meißel- und Abbruchhämmer, Bohrhämmer, Bohrgeräte und dergleichen, bei denen mindestens ein Elektromotor als Antriebseinheit zum Einsatz kommt.

Insbesondere Elektrohandwerkzeuge höherer Leistung bedürfen einer hinreichenden Kühlung des gesamten Antriebsstrangs, um durch Überhitzung verursachte Verschleiß- oder Fehlerzustände zu vermeiden. Fällt beispielsweise ein motornah integriertes Lüfterrad durch Blockade oder Verschmutzung aus oder erzeugt mangels Drehgeschwindigkeit einen nicht hinreichenden Kühlluftstrom, so ist eine thermische Überlastung der Motorwicklungen und/oder ein Heißlaufen einer Schlagwerkeinheit zu befürchten. Die vorliegende Erfindung widmet sich einer frühzeitigen Detektion von derartigen Abnormalitäten beim Betrieb eines Elektrohandwerkzeugs, welche bei Fortschreiten eine Beschädigung oder einen Ausfall verursachen würden.

Stand der Technik

Aus der US 2022/0140758 A1 geht ein Verfahren zur Detektion von Abnormalitäten beim Betrieb eines Elektrohandwerkzeugs zur frühzeitigen Erkennung von Verschleiß- oder Fehlerzuständen hervor. Die vorbekannte technische Lösung beinhaltet eine Treiberschaltung für einen bürstenlosen Gleichstrommotor (BLDC) als Antriebseinheit, welche eine Leistungsstufenschaltung umfasst, die so konfiguriert ist, dass diese den Gleichstrommotor gemäß einem Pulsweitenmodulationssignal ansteuert. Eine zusätzliche Abnormalitätsdiagnoseschaltung ist vorgesehen, welche während der Steuerung eines ersten Parameters eine Abnormalität des Drehzustandes des Gleichstrommotors anhand eines zweiten Parameters bestimmt. Dabei korrelieren sowohl der erste Parameter als auch der zweite Parameter mit der Rotation des Gleichstrommotors und sind ausgewählt aus einer Parametergruppe, umfassend: Drehzahl des Gleichstrommotors, Temperatur des Gleichstrommotors, Umgebungstemperatur, Betriebsstrom des Gleichstrommotors, Betriebsspannung des Gleichstrommotors und Tastverhältnis des den Gleichstrommotor ansteuernden pulsweitenmodulierten Signals.

Die Erkennung einer Abnormalität im Betriebsverhalten erfolgt, indem der erste Parameter auf einem konstanten Niveau gesteuert wird und die Abnormalitätsdiagnoseschaltung einen Rotationsabnormalitätszustand des Gleichstrommotors anhand einer Auswertung erkennt, ob der zweite Parameter einen vorbestimmten Parameterbereich überschreitet. Beispielsweise kann der Vergleich der beiden korrelierenden Parameter anhand der Motordrehzahl und der Motortemperatur durchgeführt werden, um festzustellen, ob eine abnormale Betriebssituation vorliegt. In diesem Fall ist ein separater Temperatursensor am Elektromotor erforderlich, da ein herkömmlicher NTC-Widerstand auf der Elektronikplatine der Steuerung nicht den gewünschten Messwert liefern kann.

Es ist die Aufgabe der vorliegenden Erfindung, ein Verfahren zur Detektion von Abnormalitäten beim Betrieb eines Elektrohandwerkzeugs zur frühzeitigen Erkennung von Verschleiß- oder Fehlerzuständen dahingehend weiter zu verbessern, dass mit einfachen technischen Mitteln eine zuverlässige indirekte Überwachung des Kühlluftstroms durchführbar ist.

Zusammenfassung der Erfindung

Die Aufgabe wird durch ein computerimplementiertes Verfahren gemäß Anspruch 1 gelöst. Hinsichtlich eines dieses Verfahren anwendenden Elektrohandwerkzeugs wird auf Anspruch 8 verwiesen. Der Anspruch 10 gibt ein die erfindungsgemäßen Verfahrensschritte verkörperndes Computerprogramm an, das auf einer insoweit mikroprozessorgesteuerten Steuereinheit eines Elektrohandwerkzeugs ausführbar ist.

Die Erfindung schließt die verfahrenstechnische Lehre ein, dass zur Detektion von Abnormalitäten beim Betrieb eines Elektrohandwerkzeugs zur frühzeitigen Erkennung von Verschleiß- oder Fehlerzuständen auf Basis der Überwachung eines Kühlluftstroms K für zumindest einen über die integrierte Steuerelektronik angesteuerten Elektromotor des Elektrohandwerkzeugs die folgenden Schritte vorgesehen sind:

- - Ermitteln einer ersten Temperatur $T_e$ bezogen an der Steuerelektronik;

- Messen einer zweiten Temperatur $T_m$ mit einem im Kühlluftstrom K angeordneten Temperatursensor;

- Vergleichen des zeitlichen Verlaufs der geschätzten ersten Temperatur $T_e$ mit dem zeitlichen Verlauf der gemessenen zweiten Temperatur $T_m$;

- Auswerten der Vergleichsdaten dahingehend, ob die zeitpunktbezogene Temperaturdifferenz zwischen der ersten Temperatur $T_e$ und der zweiten Temperatur $T_m$ einem festgelegten Schwellwert $\Delta_{max}$ entspricht, um auf eine den Kühlluftstrom K reduzierende oder blockierende verschleiß- oder fehlerverursachende Abnormalität rückzuschließen.

Die erfindungsgemäße Lösung basiert auf der Erkenntnis, dass bei einem Elektrohandwerkzeug eine Lufteinlassblockade eine Abnormalität darstellt, welche dem Elektromotor schadet, auch wenn dieser selbst ordnungsgemäß funktioniert. Erfahrungsgemäß entsteht eine derartige Störung bei Elektrohandwerkzeugen durch Staub und Schmutz, welches das Werkzeug während des Betriebs selbst verursacht oder durch eine ungünstige Haltung des Elektrohandwerkzeugs durch den Benutzer während des Einsatzes. Durch den erfindungsgemäßen Temperaturvergleich und die hiermit verbundene spezielle Temperaturdifferenzauswertung kann zuverlässig auf einen reduzierten oder blockierten Kühlluftstrom K rückgeschlossen werden, ohne dass ein spezieller Strömungsmesssensor erforderlich ist.

Das Ermitteln einer ersten Temperatur $T_e$ bezogen an der Steuerelektronik kann dabei durch einen NTC-Widerstandwert der Steuerelektronik anhand eines elektronischen Modells erfolgen. Alternativ kann das Ermitteln einer ersten Temperatur $T_e$ bezogen an der Steuerelektronik kann dabei durch einen Temperatursensor an der Steuerelektronik, beispielsweise an einem MOSFET erfolgen. Es ist dabei zu beachten, dass die erste Temperatur $T_e$ an einer Stelle erfasst wird, die sich in dem Kühlluftstrom befindet.

Im Prinzip wird gemäß Erfindung beurteilt, ob sich die gemessene zweite Temperatur des Kühlluftstroms zu der geschätzten Temperatur der Steuerelektronik in einem zu großen Abstand befindet.

Vorzugsweise wird als Schwellwert $\Delta_{max}$ gemäß einer ersten Ausführungsform eine maximal zulässige Differenztemperatur $\Delta T_{max}$ definiert, deren Überschreiten als verschleiß- oder fehlerverursachende Abnormalität eingestuft wird. Gemäß einer alternativen Ausführungsform kann als Schwellwert $\Delta_{max}$ auch eine maximal zulässige Steigungsrate der Differenz der Temperaturverläufe $dT_{max}$ definiert werden, deren Überschreiten dann ebenfalls als verschleiß- oder fehlerverursachende Abnormalität eingestuft wird. Die entsprechenden Schwellwerte $\Delta_{max}$ werden durch Versuchsreihen geräteindividuell festgelegt oder können zumindest auf Erfahrungswerten basieren.

Das erfindungsgemäße Schätzen der ersten Temperatur $T_e$ erfolgt vorzugsweise anhand eines elektronischen Modells, das ein datengesteuertes elektronisches Modell erster Ordnung darstellt und als Eingangswerte den Motorstrom $I_M$, die Motordrehzahl $n_M$ und die Umgebungstemperatur Tu verarbeitet. Als Ausgabewert wird die auf den NTC-Widerstand der Steuerelektronik bezogene Temperatur $T_e$ ermittelt. Damit nutzt das elektronische Modell an sich vorhandene Messdaten der Steuerung des Elektrohandwerkzeugs. Das elektronische Modell lässt sich anhand folgender Formel beschreiben:

$$\dot{x(t)} = Ax(t) + Bu(t)$$

$$y(t) = Cx(t)$$

wobei: u = Eingangswerte, y = Ausgabewerte, x = Zustandswerte und A1x1, B3x1, C1x1 Systemmatrizen darstellen, welche das System vollständig beschreiben. Der Optimierungsalgorithmus läuft zumindest einmalig offline, um die Systemparameter A, B und C basierend auf den Messdaten aufzufinden.

Als eine den Schritt des Vergleichens weiter verbessernde Maßnahme wird vorgeschlagen, dass dieses mit einer relativ hohen Samplingrate zwischen 0,5 bis 100 Hz durchgeführt wird. Da das Temperatur-Schätzmodell wegen seiner geringen Größe eine sehr geringe Rechnerkapazität beansprucht, kann das Vergleichen der zeitlichen Temperaturverläufe mit einer relativ hohen Samplingrate durchgeführt werden, so dass die Detektion von Abnormalitäten selbst einer hohen Dynamik von Verläufen folgen kann. Durch die hohe Genauigkeit des anhand des elektronischen Modells geschätzten NTC-Signals führt der erfindungsgemäße Vergleich der Temperaturverläufe unmittelbar im Folgeschritt zur Auswertung. Die Auswertung beinhaltet - wie vorstehend erläutert - eine Prüfung anhand eines Schwellwerts, welcher die zu einem Zeitpunkt auftretende Differenztemperatur oder Steigungsrate der Temperaturverläufe darstellen kann.

Wird der Schwellwert überschritten, so kann gemäß einer weiteren die Erfindung verbessernden Maßnahme ein Ausgeben eines Warnsignals an den Bediener des Elektrohandwerkzeugs erfolgen. Hierdurch bekommt der Bediener die Möglichkeit, die Belastung des Elektrohandwerkzeugs, dessen Handhabung oder Betriebsmodus so zu ändern, so dass im Weiteren eine Überlastung vermieden wird. Zusätzlich oder alternativ kann insbesondere bei einer mehrmals innerhalb eines festgelegten Zeitintervalls festgestellten Schwellwertüberschreitung ein automatisches Abschalten des Elektromotors des Elektrohandwerkzeugs durchgeführt werden. Ein Wiederanschalten kann dann nach Ablauf einer Ruhezeit oder nach Rücksetzen der Elektronik durch Wartungspersonal vorgesehen werden. Hierdurch lässt sich beispielsweise ein Motordefekt des Elektrohandwerkzeugs vorausschauend vermeiden.

Da Elektrohandwerkzeuge der hier interessierenden Art wegen ihrer integrierten Steuerelektronik für einen vorzugsweise bürstenlosen Gleichstrommotor sowieso mit einer mikroprozessorbestückten Steuerplatine ausgerüstet sind, lässt sich die erfindungsgemäße Zusatzfunktionalität vorzugsweise softwaretechnisch mit geringem Zusatzaufwand hierin implementieren. Hierfür umfasst ein entsprechendes Computerprogramm Befehle, welche bei der Ausführung des Programms durch die mikroprozessorgesteuerte Steuereinheit des Elektrohandwerkzeugs diese dazu veranlassen, das vorstehend erläuterte Verfahren auszuführen.

Beschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt.

Es zeigt:

Figur 1 eine schematische Blockschaltbilddarstellung eines mit dem erfindungsgemäßen Funktionsumfang ausgestatteten Elektrohandwerkzeugs, und

Figur 2 einen Ablaufplan zur Veranschaulichung der Schritte des computerimplementierten Verfahrens.

**Ausführungsbeispiel**

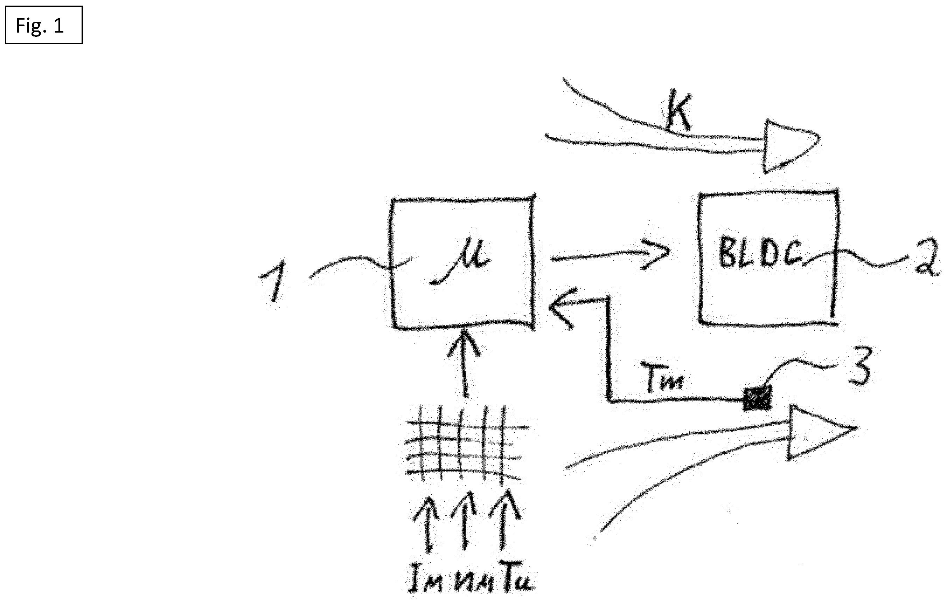

Gemäß Figur 1 umfasst ein Elektrohandwerkzeug eine mikroprozessorgesteuerte Elektronikeinheit 1 zur Ansteuerung eines als bürstenloser Gleichstrommotor BLDC ausgebildeten Elektromotors 2. Der Elektromotor 2 wird durch einen Kühlluftstrom K gekühlt, welcher innerhalb des - hier nicht weiter dargestellten - Gehäuses des Elektrohandwerkzeugs geführt wird. Im Kühlluftstrom K ist ein Temperatursensor 3 angeordnet, dessen Messwerte zur Steuerelektronik 1 weitergeleitet werden.

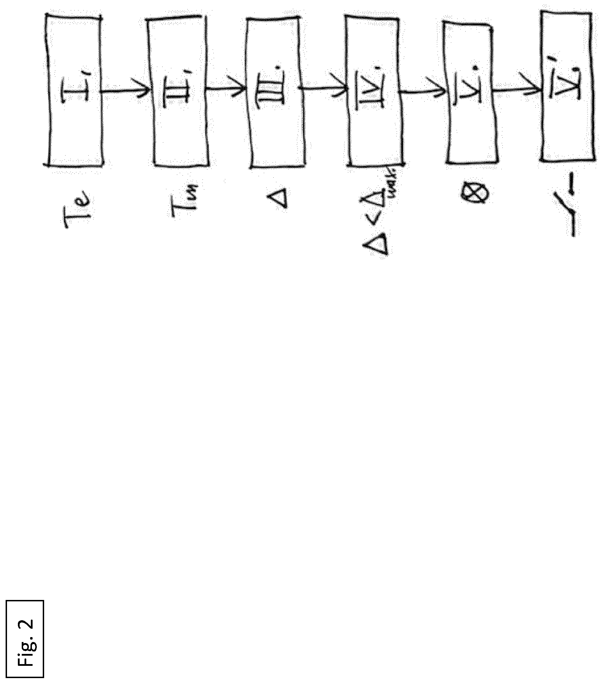

Mit dieser Einrichtung lässt sich gemäß Figur 2 ein Verfahren zur Detektion von Abnormalitäten beim Betrieb des Elektrohandwerkzeugs zur frühzeitigen Erkennung von Verschleiß- oder Fehlerzuständen auf Basis der Überwachung des Kühlluftstroms K wie folgt durchführen:

In einem Verfahrensschritt I. erfolgt ein Schätzen einer ersten Temperatur Te bezogen auf einen NTC-Widerstand der Steuerelektronik anhand eines elektronischen Modells. Anschließend wird im Verfahrensschritt II. ein Messen einer zweiten Temperatur Tm mit dem im Kühlluftstrom K angeordneten Temperatursensor durchgeführt.

Anschließend wird im Verfahrensschritt III. ein Vergleichen des zeitlichen Verlaufs der geschätzten ersten Temperatur $T_e$ mit dem zeitlichen Verlauf der gemessenen zweiten Temperatur $T_m$ durchgeführt, um schließlich im Verfahrensschritt IV. die Vergleichsdaten dahingehend auszuwerten, ob die zeitpunktbezogene Temperaturdifferenz zwischen der ersten Temperatur $T_e$ und der zweiten Temperatur $T_m$ über einen festgelegten Schwellwert $\Delta_{max}$ ansteigt, um auf eine den Kühlluftstrom K reduzierende oder blockierende verschleiß- oder fehlerverursachende Abnormalität zu schließen.

Ist der festgelegte Schwellwert $\Delta_{max}$ überschritten, so wird im folgenden Verfahrensschritt V. zunächst ein Warnsignal an den Bediener des Elektrohandwerkzeugs abgegeben, der damit die Gelegenheit bekommt, die Betriebssituation des Elektrohandwerkzeugs zu ändern. Wird der Schwellwert $\Delta_{max}$ mehrfach überschritten,

so sieht bei diesem Ausführungsbeispiel ein finaler Verfahrensschritt V.' ein Abschalten des Elektromotors des Handwerkzeugs vor, um dieses stillzulegen.

Die erfindungsgemäße Lösung ist nicht beschränkt auf das vorstehend beschriebene bevorzugte Ausführungsbeispiel. Es können vielmehr auch Abwandlungen hiervon vorgenommen werden, welche vom Schutzbereich der Ansprüche mit umfasst sind. So ist es beispielsweise auch möglich, andere Eingangswerte in das elektronische Modell einzugeben, welche für eine Abnormalität im Kühlluftstrom K repräsentativ sind.

**Bezugszeichenliste**

1 Steuerelektronik
2 Elektromotor
3 Temperatursensor

| | |
|---|---|
| BLDC | bürstenloser Gleichstrommotor |
| $T_e$ | erste Temperatur |
| $T_m$ | zweite Temperatur |
| K | Kühlluftstrom |
| $\Delta_{max}$ | Schwellwert |
| $\Delta_{Tmax}$ | zulässige Differenztemperatur |
| $(dT_{max} / dt)$ | zulässige Steigerungsrate der Differenz der Temperaturverläufe |
| $I_M$ | Motorstrom |
| $n_m$ | Motordrehzahl |
| Tu | Umgebungstemperatur |

**Patentansprüche**

**1.** Computerimplementiertes Verfahren zur Detektion von Abnormalitäten beim Betrieb eines Elektrohandwerkzeugs zur frühzeitigen Erkennung von Verschleiß- oder Fehlerzuständen auf Basis der Überwachung des Kühlluftstromes (K) für zumindest einen über eine integrierte Steuerelektronik (1) angesteuerten Elektromotor (2) des Elektrohandwerkzeugs, umfassend die folgenden Schritte:

- Ermitteln einer ersten Temperatur $T_e$ bezogen an der Steuerelektronik;
- Messen (II.) einer zweiten Temperatur ($T_m$) mit einem im Kühlluftstrom (K) angeordneten Temperatursensor (3);
- Vergleichen (III.) des zeitlichen Verlaufs der geschätzten ersten Temperatur ($T_e$) mit dem zeitlichen Verlauf der gemessenen zweiten Temperatur ($T_m$);
- Auswerten der Vergleichsdaten dahingehend, ob die zeitpunktbezogene Temperaturdifferenz zwischen der ersten Temperatur $T_e$ und der zweiten Temperatur $T_m$ einem festgelegten Schwellwert $\Delta_{max}$ entspricht, um auf eine den Kühlluftstrom K reduzierende oder blockierende verschleiß- oder fehlerverursachende Abnormalität rückzuschließen.

2. Verfahren nach Anspruch 1,
   **dadurch gekennzeichnet, dass** als Schwellwert ($\Delta_{max}$) eine maximal zulässige Differenztemperatur ($\Delta T_{max}$) definiert wird, deren Überschreiten als verschleiß- oder fehlerverursachte Abnormalität eingestuft wird.

3. Verfahren nach Anspruch 1,
   **dadurch gekennzeichnet, dass** als Schwellwert ($\Delta_{max}$) eine maximal zulässige Steigerungsrate der Differenz der Temperaturverläufe ($dT_{max} / dt$) definiert wird, deren Überschreiten als verschleiß- oder fehlerverursachte Abnormalität eingestuft wird.

4. Verfahren nach Anspruch 1,
   **dadurch gekennzeichnet, dass** im Schritt (I.) ein datengesteuertes elektronisches Modell erster Ordnung den Motorstom ($I_M$), die Motordrehzahl ($n_M$) und die Umgebungstemperatur (Tu) als Eingangswerte verarbeitet, um die auf den NTC-Widerstand der Steuerelektronik (1) bezogene erste Temperatur ($T_e$) als Ausgabewert zu berechnen.

5. Verfahren nach Anspruch 1,
   **dadurch gekennzeichnet, dass** im Schritt (III.) das Vergleichen der zeitlichen Temperaturverläufe mit einer hohen Samplingrate zwischen 0,5 bis 1000 Hz durchgeführt wird.

6. Verfahren nach Anspruch 1,
   **gekennzeichnet durch:**

   - Ausgeben (V.) eines Warnsignals an den Bediener des Elektrohandwerkzeugs, falls der Schwellwert ($\Delta_{max}$) überschritten worden ist.

7. Verfahren nach Anspruch 1,
   **gekennzeichnet durch:**

   - Ausgeben (V.') eines Abschaltsignals für den Elektromotor (2) des Elektrohandwerkzeugs, falls der Schwellwert ($\Delta_{max}$) überschritten worden ist, vorzugsweise mehrmals innerhalb eines vorbestimmten Zeitintervalls.

8. Verfahren nach Anspruch 1,
   **gekennzeichnet durch:**

   - Ausgeben (V.') eines Signals für den Elektromotor (2) des Elektrohandwerkzeugs zur Reduzierung der Drehzahl des Elektromotors (2), falls der Schwellwert ($\Delta_{max}$) überschritten worden ist, vorzugsweise mehrmals innerhalb eines vorbestimmten Zeitintervalls.

9. Elektrohandwerkzeug mit mindestens einem Elektromotor (2) als Antriebseinheit, der von einer mikroprozessorgesteuerten Steuerelektronik (1) angesteuert wird, welche ein Verfahren nach einem der vorstehenden Ansprüche 1 bis 7 durchführt.

10. Elektrohandwerkzeug nach Anspruch 9,
    **dadurch gekennzeichnet, dass** der Elektromotor (2) als ein über die Steuerelektronik (1) drehzahlvariabel ansteuerbarer bürstenloser Gleichstrommotor (BLDC) ausgebildet ist.

11. Computerprogramm, umfassend Befehle, die bei der Ausführung des Programms durch eine mikroprozessorgesteuerte Steuereinheit (1) eines Elektrohandwerkzeugs, diese veranlassen, das Verfahren nach einem der vorstehenden Ansprüche 1 bis 8 auszuführen.

Fig. 1

EP 4 574 341 A1

Fig. 2

Europäisches
Patentamt

European
Patent Office

Office européen
des brevets

# EUROPÄISCHER RECHERCHENBERICHT

Nummer der Anmeldung

EP 23 21 9046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 736 872 A1 (STIHL AG & CO KG ANDREAS [DE]; MURATA MANUFACTURING CO [JP]) 11. November 2020 (2020-11-11) * Absatz [0001] - Absatz [0022] * * Absatz [0036] * * Ansprüche; Abbildungen * ----- | 1-11 | INV. B25F5/00 H02P29/024 H02P29/60 |
| A | EP 3 189 941 B1 (MAKITA CORP [JP]) 18. September 2019 (2019-09-18) * Absatz [0001] * * Absatz [0128] - Absatz [0148] * * Abbildungen * ----- | 1-11 | |
| A | WO 2017/042144 A1 (HILTI AG [LI]) 16. März 2017 (2017-03-16) * das ganze Dokument * ----- | 1-11 | |
| A | DE 10 2007 000524 A1 (HILTI AG [LI]) 23. April 2009 (2009-04-23) * das ganze Dokument * ----- | 1-11 | |

RECHERCHIERTE SACHGEBIETE (IPC)

B25F
H02P

Der vorliegende Recherchenbericht wurde für alle Patentansprüche erstellt

| Recherchenort | Abschlußdatum der Recherche | Prüfer |
|---|---|---|
| Den Haag | 4. Juni 2024 | van Woerden, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 9046

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2024

| Im Recherchenbericht angeführtes Patentdokument | Datum der Veröffentlichung | Mitglied(er) der Patentfamilie | Datum der Veröffentlichung |
|---|---|---|---|
| EP 3736872 A1 | 11-11-2020 | CN 111916858 A | 10-11-2020 |
|  |  | EP 3736872 A1 | 11-11-2020 |
|  |  | JP 2020205248 A | 24-12-2020 |
|  |  | US 2020358054 A1 | 12-11-2020 |
| EP 3189941 B1 | 18-09-2019 | CN 106944983 A | 14-07-2017 |
|  |  | EP 3189941 A1 | 12-07-2017 |
|  |  | JP 6697885 B2 | 27-05-2020 |
|  |  | JP 2017121681 A | 13-07-2017 |
|  |  | US 2017193761 A1 | 06-07-2017 |
| WO 2017042144 A1 | 16-03-2017 | CN 108025427 A | 11-05-2018 |
|  |  | EP 3141349 A1 | 15-03-2017 |
|  |  | EP 3347166 A1 | 18-07-2018 |
|  |  | US 2018311806 A1 | 01-11-2018 |
|  |  | WO 2017042144 A1 | 16-03-2017 |
| DE 102007000524 A1 | 23-04-2009 | DE 102007000524 A1 | 23-04-2009 |
|  |  | FR 2922692 A1 | 24-04-2009 |
|  |  | US 2009103263 A1 | 23-04-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20220140758 A1